(19) Europäisches Patentamt
European Patent Office
Office européen des brevets

(11) **EP 1 092 668 A1**

## (12) EUROPEAN PATENT APPLICATION

(43) Date of publication:
**18.04.2001 Bulletin 2001/16**

(51) Int Cl.7: **B66B 5/00**, H04M 11/04

(21) Application number: **99500181.5**

(22) Date of filing: **11.10.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **Mac Puar S.A.**<br>**50180 Utebo, Zaragoza (ES)** | (72) Inventor: **Conchello Moreno, Jose Angel**<br>**Naves 14-20, 50180 Utebo, Zaragoza (ES)**<br><br>(74) Representative: **Perez Bonal, Bernardo**<br>**Explanada 8**<br>**28040 Madrid (ES)** |

(54) **Emergency telephone for elevators and programming procedure**

(57)    Emergency telephone for elevators and programming procedure for said telephone, which functions as a speaker phone, without an external power source, and connected to the switched telephone network and allows connection either by pressing emergency button (9) on cabin button panel (8) or by an action of the elevator itself. The telephone may be programmed by a keyset (1) on the rear of the set which will allow to store the telephone numbers to be called automatically, as well as an internal remote code by which it is possible to send commands from a remote centre to the set, to which our set will respond by a set of DTMF tones.

FIG.1

**Description**

## OBJECT OF THE INVENTION

The present invention relates to an emergency teephone for elevators and a programming procedure, specifically to telehones installed inside elvators in order to be used in emergency situations, and a telephone programming procedure. This telephone set is specifically a hands-free set without a keyset available to the general public, i.e. keys so that the occupant of the elevator may operate the telephone; however, there is a set of keys on the rear of this emergency telephone used to program it.

Emergency telephone connected to the switched telephone network as a normal telephone, differing from other telephones of this type in that it does not need an external power source.

Therefore, the present invention may be circumscribed within devices meant for communications in emergency situations, specifically from elevator cabins but without external keys, allowing however communication with the outside, specifically to previously programmed numbers.

## BACKGROUND OF THE INVENTION

Until now emergency telephones for elevators were characterised among other factors by requiring an external power source; with the system described herein the set will be powered directly from the telephone network.

Another characteristic of the units in the market which are used as commmuications equipment for emergency situations is that they are normally equipped with a set of keys, with the elevator telephone being an extension of the office where the telephone is, extension which corresponds to the elevator telephone. Although this does allow to not require an external power source, it only allows communication with a single maintenance number, requiring the presence of a person at all times at the location where elevator emergency calls are received, or to know which number must be dialed, and also have someone present at such location to provide service.

In the manner described above it is not possible to carry out moitoring from a contrrol centre, and the emergency call may only be generated by the user from the inside; there are situations in which it is advisable to generate the emergency call based on the actions or status of the elevator. In addition, in this way it is possible to assign a remote code to all elevators, so that a remote control and quick actions may be carried out from a monitoring and control post in emergency situations.

In view of all of the above, the object of the present emergency telephone for elevators and programming procedure intends to solve these disadvantages and provide a hands-free telephone set which allows to communicate with certain pre-defined numbers and which is powered through the telephone network itself, with an internal remote code for identification and in which the emergency signal is generated either after pushing the emergency button for a relevant time or by an emergency detected by the elevator control actions.

## DESCRIPTION OF THE INVENTION

The proposed invention of an emergency telephone for elevators and programming procedure consists of a telephone set which is placed inside elevator cabins, allowing communication to hte outside without external keys. In addition it is provided with a keyset on the rear of the set which permits programming it, for example with the desired numbers which are to be called automatically in the event of the emergency button being pushed, located on the elevator cabin button panel.

The numbers which may be called automatically are as many as three, and the set by means of a previously programmed sequence will jump from one to the next if the number called does not reply.

The unit object of the invention does not require an external power source, and incorporates a telephone line status analyzer. There are multiple ways to end a call: either externally, by a DTMF code, by the user in the cabin, by lack of activity or by timeout.

As mentioned before the unit can be programmed with an internal remote code, which may well be that assigned to it as a unit of the switched telephone netwrork; by means of this code it is possible to obtain and send to this telephone a number of remote instructions, such as:

- requesting the type of communication, returning the present communication to the set by means of DTMF codes.
- Remote disconnection
- Obtaining the reote identification code if the centre called automatically did not have it.

The circuits which make up the unit shall be distributed in several blocks related to each other,, such as the tone detection and analyzer block, the network analyzer, the external call detector, the microprocessor block, switching block, dialing block, interface with the outside and audio control block.

Therefore, the object of the invention of an emergency telephone for elevators and programming procedure consists of a unit which combines all of the above characteristics, namely:

- telephone connected to the switched telephone network
- it does not require an outside power source
- it allows communication with the outside either by an action on the part of the user or by a command given by the elevator control unit

- it allows to program the numbers to be called
- it is provided with an internal remote code by which it is possible to send and receive a number of commands
- it can function as a normal telephone

**DESCRIPTION OF THE DRAWINGS**

As a complement of the description being made and in order to aid a better comprehension of its characteristics, the present descriptive memory is accompanied by a set of drawings where, for purpose of illustratio and in a non-limiting maner, the more significant details of the invention are shown.

Figure 1 shows the rear of the emergency telephone programming unit where the keyset and terminals for disconnection, call due to an action, and emergency button in cabin panel may be seen.

Figure 2 shows the front panel of the emergency telephone and the button panel of the cabin.

Figure 3 shows the blocks which make up the unit object of the invention, as well as their relationship with each other.

**PREFERRED EMBODIMENT OF THE INVENTION**

In view of the figures, a preferred embodiment is now described for the emergency telephone for elevators and programming procedure for this set.

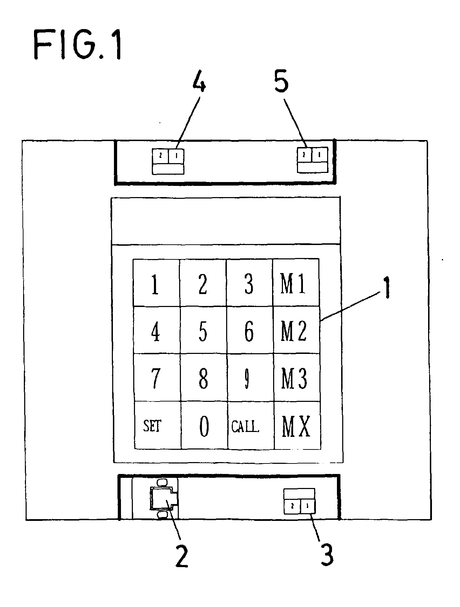

figure 1 shows the part of the emergency telephone set which is not accessible to the user, which is provided with a keyset (1) for programming this set, consisting of numerical keys and function keys such as the following:

- CALL key, to place and end a call
- SET key, to program the telephone numbers which are to be called automatically
- MX key, used to program the remote identification code
- M1, M2, and M3 keys, memories where the numbers to be called are stored.

In addition to keyset (1) there are a number of connectors used for different functions:

- connector (2) is used to connect an RJ11 telephone line connector
- Connector (3) allows to disable the telephone set when +24V are applied
- Connection (4) is a normally open contact (NO) of emergency button (9), which will indicate whether the button in the cabin has been pressed, and therefore the start of the telephone connection.
- Connector (5) which upon applying +24V begins the connection, in which case the telephone connection with the preset numbers is due to an action.

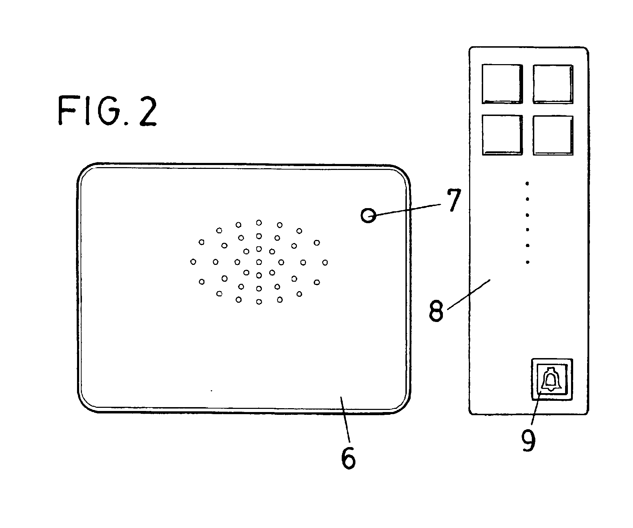

Figure 2 shows front panel (6) which can be accessed from the cabin, on which is LED (7) which indicates that the communication is established or is being made. Next to panel (6) is cabin button panel (8) shown at a different scale, and on it emergency button (9) which must be pressed continuously for 5 seconds in order to establish communication with the preset numbers, thus preventing accidental communication being established by a simple pressure; once communication is established if emergency button (9) in cabin button panel (8) is pressed for more than three seconds the communication is terminated.

The unit is provided with a set of electronic circuits such as a microprocessor, a network analyzer, a DTMF detector and an integrated unit programming circuit.

As regards the programming procedure, this consists of the following steps:

- press the CALL key to unhook; a dial tone is received and LED (7) on front panel (6) will light.
- Perform the following sequence on the keyset:

    SET + M1 + (telephone no.) + SET

    SET + M2 + (telephone no.) + SET

    SET + M3 + (telephone no.) + SET

- This will save the number to be called in each memory. These numbers may be programmed or changed individually.
- To check that the programming is correct a call is made to this number by pressing the CALL key which unhooks the set, then pressing M1 and checking that the number programmed is correct, and finally the communication is ended by pressing CALL once again. This is repeated for M2 and M3.
- In addition, it is possible to program the remote identification code of the set, which will allow the set to be identified from a remote post by a control unit. The programming process is the following:

    - unhook by pressing CALL
    - wait for a dial tone and press

    SET + MX + 1 + (RIC) + SET

- Hang up by pressing CALL

The unit may operate as a normal telephone by pressing the CALL key in keyset (1), waiting for a dial tone and dialing the number desired. To end the call the CAL button must be pressed again.

The automatic connection process to the preset numbers is performed by pressing emergency button (9) on cabin panel (8), at which time LED (7) on the front panel (6) will light up. The calling process to the preset numbers will begin immediately, following the set sequence. If there is no reply in the number called it will automatically jump to the following number in the sequence. If there is no reply in the following sequence, the unit hangs up automatically and it is necessary to press the button to make the emergency call again. Contact (4) which is normally open is a contact of emergency button (9) on cabin panel (8), which will close when button (9) is pressed.

In addition to placing the call when emergency button (9) is pressed, it is possible to place a call by activation due to an elevator action, when +24V are applied at the terminals of connector (5), with the same process as for the automatic connection being carried out.

With connector (3) on the rear of the set it is possible to disable the set by applying +24V DC to said connector (3), disconnecting the set from the telephone line and therefore disabling its functions.

This telephone may receive calls from the outside as any other telephone, but it does not have a ringer, so that after four rings at most the connection will be made and communication started by an invitation to speak.

It is possible to send commands to the telephone set object of the invention from a remote unit, by using DTMF codes, as the set has an internal remote code.

The commands which may be sent are:

- Command 1: request for connection time, by dialing 1 + 2 + 1. The set will return the type of connection under way.

    - 2 + 1 + 1 automatic connection due to connection in cabin
    - 2 + 1 + 2 automatic connection due to connection by button in cabin
    - 2 + 2 + 1 automatic connection due to elevator action
    - 2 + 2 + 2external call

- command 2: remote disconnection 1+ 2 + 2, set replies by hanging up the line
- command 3: obtaining remote identification code.

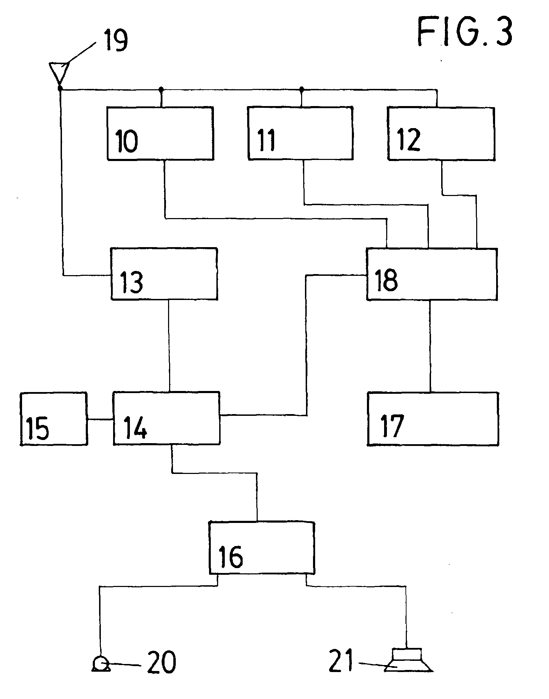

Figure 3 shows the blocks which make up the emergency telephone for elevators and programming procedure, where we can see that input telephone line (19) is connected to DTMF tones detector and descrambler (10), and also to network analyzer (11) which analyses the different status of telephone line (19) and is connected to external call detector (12); these three blocks (10), (11) and (12) are connected to microprocessor (18) which has the management software for the telephone set operation. Telephone line (19) is also connected to switching block (13) which hangs up and unhooks the line, and both block (13) and microprocessor block (18) are connected to the dialing control block (14), which is in charge of controlling switch block (13), EPROM memory (15), acting as an interface with the programming keyset and dialing by means of DTMF tones; connected to microprocessor block (18) is external interface block (17), as well as audio control block (16) which controls microphone (20) and speaker (21). Block (16) is dependent on general dialing control block (14).

Within its essence the invention may be reduced to practice in other forms of embodiments which are different form that given as an example in the description, which will also be covered by the protection sought. Likewise, it may be constructed in any shape or size and with the most suitable materials as this is all covered within the spirit of the claims.

**Claims**

1. Emergency telephone for elevators characterised in that said set comprises a number of properties such as allowing to place calls from inside an elevator cabin simply by pressing a button, or placed by an elevator action, which is connected to the switched telephone network and so does not require an power accumulator to operate, which includes a line analyzer, which allows programming certain numbers which are to be called when the calling process begins, and is also provided with a remote identification code, the set being provided with a number of electronic circuits and on its rear with a keyset (1), a set of connectors (2, 3, 4 and 5) and with an emergency button (9) on cabin button panel (9) and an LED (7) indicating that a call is being made on front panel (6).

2. Emergency telephone for elevators as in claim 1, characterised in that connector (2) is meant for an RJ 11 telephone line connector, connector (3) is to disable the set by applying +24V, connector (4) is connected to a normally open contact of emergency button (9) on cabin button panel (8), and connector (5) is a connector such that by applying +24V DC the set begins automatic connection due to an elevator action or status.

3. Emergency telephone for elevators as in claim 1, characterised in that both the numbers to be called and the remote identification code are programmable, and where said code allows the set to be identified by a monitoring and control centre.

4. Emergency telephone for elevators as in claim 1, characterised in that the telephone is able to interpret DTMF codes, so that commands may be given to the telephone from a remote device and it may respond. The commands which it may be given are:

- Command 1: request for connection time, by dialing 1 + 2 + 1. The set will return the type of connection under way:

  - 2 + 1 + 1 CALL key
  - 2 + 1 + 2 automatic connection due to connection by button in cabin
  - 2 + 2 + 1 automatic connection due to elevator action
  - 2 + 2 + 2 external call

- command 2: remote disconnection 1 + 2 + 2, set responds by hanging up the line
- command 3: obtaining remote identification code, dialing 1 + 2 + 3, the set responds by providing its remote identification code.

5. Emergency telephone for elevators as in claim 1, characterised in that the set of electronic circuits consists of a detector and tone descrambling block (10), a network analyzer block (11), which analyses the network and descrambles the different status of telephone line (19), by a switching block in charge of hanging up and unhooking (13), by a dialing control block (14), which among other functions is in charge of controlling the switching block, by an EPROM memory block (15) which stores the telephone numbers, by an audio control block (16) in charge of controlling both microphone (20) and speaker (21) of the telephone, by an external interface block (17) which connects the telephone to the external peripherals and finally by a microprocessor block which manages and controls the telephone operation.

6. Emergency telephone for elevators as in claim 5, characterised in that the tone analyzer and descrambling block (10), network analyzer block (11), external call detector block (12) and switching block (13) are connected to telephone line (19), and where microprocessor bock (18) is connected to blocks (10), (11), (12), dialing control block (14) and external interface block (17); dialing control block (14) controls EPROM memory (15), dialing and switching block (13) and audio block (16), which in turn controls microphone (20) and speaker (21).

7. Programming procedure for an emergency telephone for elevators, characterised in that the procedure for programming the numbers which are to be automatically called by pressing the emergency button () consists of the following steps:

- press the CALL key to unhook; a dial tone is received and LED (7) on front panel (6) will light.
- Perform the following sequence on the keyset:

  SET + M1 + (telephone no.) + SET

  SET + M2 + (telephone no.) + SET

  SET + M3 + (telephone no.) + SET

- Check that programming has been correctly performed by placing a call to this number.

8. Programming procedure for an emergency telephone for elevators, as in claim 1, characterised in that the storage procedure for the internal remote code consists of the following steps:

- unhook by pressing CALL
- wait for a dial tone and press

  SET + MX + 1 + (RIC) + SET

- Hang up by pressing CALL

# FIG.1

| 1 | 2 | 3 | M1 |
| 4 | 5 | 6 | M2 |
| 7 | 8 | 9 | M3 |
| SET | 0 | CALL | MX |

FIG. 2

7

8

6

9

FIG.3

## EUROPEAN SEARCH REPORT

European Patent Office

**Application Number**

EP 99 50 0181

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | FR 2 539 566 A (LETAILLEUR ROBERT) 20 July 1984 (1984-07-20) * page 2 * | 1,7 | B66B5/00 H04M11/04 |
| A | GB 2 225 514 A (EPL KONE PTY LTD) 30 May 1990 (1990-05-30) * page 11 - page 12 * | 1,7 | |
| A | US 5 086 450 A (KITAGAWA SHIGEO ET AL) 4 February 1992 (1992-02-04) * column 2, line 60 - column 3, line 8 * * column 3, line 23 - line 51 * | 1,7 | |
| | | | **TECHNICAL FIELDS SEARCHED (Int.Cl.7)** B66B H04M |

The present search report has been drawn up for all claims

| Place of search | Date of completion of the search | Examiner |
|---|---|---|
| THE HAGUE | 19 May 2000 | Mikkelsen, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 99 50 0181

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2000

| Patent document cited in search report | | Publication date | Patent family member(s) | | Publication date |
|---|---|---|---|---|---|
| FR 2539566 | A | 20-07-1984 | NONE | | |
| GB 2225514 | A | 30-05-1990 | NONE | | |
| US 5086450 | A | 04-02-1992 | JP | 3079575 A | 04-04-1991 |
| | | | CN | 1049762 A,B | 06-03-1991 |
| | | | KR | 9311618 B | 16-12-1993 |

EPO FORM P0459

For more details about this annex : see Official Journal of the European Patent Office, No. 12/82